# EUROPEAN PATENT APPLICATION

(11) **EP 4 697 469 A1**
(43) Date of publication of application: **18.02.2026**
(21) Application number: 25189517.3
(22) Date of filing: 15.07.2025
(51) Int. Cl.: H01M 50/213, H01M 50/289, H01M 10/6556, H01M 50/249, H01M 50/291

(54) **BATTERY PACK**

(30) Priority: 14.08.2024 KR 20240109045
(71) Applicant: SAMSUNG SDI CO., LTD., Yongin-si, Gyeonggi-do 17084 (KR)
(72) Inventor: KIM, Junseop, 17084 Yongin-si (KR)
(74) Representative: Marks & Clerk LLP

(57) **Abstract**

Provided is a battery pack for a secondary battery that can improve efficiency of a manufacturing process of the secondary battery and the performance or structural stability of the battery pack for the secondary battery. The battery pack may include a battery cell that has two end portions along a height direction, a cell holder that accommodates the battery cell therein, a frame part that covers a side surface portion of the cell holder, an adhesive part that is arranged between the cell holder and the frame part, and a rib portion that extends along a periphery of the side surface portion of the cell holder and divides the side surface portion of the cell holder into a first region and a second region spaced apart from each other along the height direction.

## Description

### FIELD

Embodiments relate to a battery pack, and more particularly, to a battery pack that improves the performance or structural stability of a secondary battery or a battery pack for the secondary battery.

### BACKGROUND

In general, with the rapid development of electrical, electronic, communications and computer industries, the demand for high-performance and high-safety secondary batteries has been rapidly increasing recently. In particular, with the trend toward lighter, thinner, and more portable electrical and electronic products, secondary batteries, which are key components, are also required to be lighter and smaller.

Specifically, as environmental pollution problems such as air pollution and noise due to the mass spread of automobiles and the need for new forms of energy sources due to the depletion of oil have arisen, the need for the development of electric vehicles that can solve these problems has increased, and the development of batteries with high output and high energy density is required as the power sources for the vehicles.

In response to such demands, one of the high-performance, next-generation, high-tech new batteries that have been receiving the most attention recently is a secondary battery. Lithium, used as a cathode, is most in the spotlight as an electrode material for high energy density batteries because of its very low density and standard reduction potential.

The above-described information disclosed in the background technology of this disclosure is only intended to improve understanding of the background of the present disclosure and therefore may include information that does not constitute the prior art.

### SUMMARY

Embodiments aim to provide a battery pack that can improve the performance or structural stability of a secondary battery or a battery pack for the secondary battery.

The problems to be solved by the present disclosure are not limited to the problems described herein, and other objects and advantages of the present disclosure will be understood by the following description and will be more apparent from the embodiments of the present disclosure. Further, it will be readily understood that the objects and advantages of the present disclosure can be realized by the means set forth in the appended claims and combinations thereof.

Additional aspects will be set forth in part in the description which follows and, in part, will be apparent from the description, or may be learned by practice of the presented embodiments of the disclosure.

According to some embodiments of the present technology for solving the above technical problem, a battery pack includes a battery cell that has two end portions along a height direction, a cell holder that accommodates the battery cell therein, a frame part that covers a side surface portion of the cell holder, an adhesive part that is arranged between the cell holder and the frame part, and a rib portion that extends along a periphery of the side surface portion of the cell holder and divides the side surface portion of the cell holder into a first region and a second region spaced apart from each other along the height direction.

In some embodiments of the present disclosure, the rib portion may include a first rib that extends along a peripheral direction of the cell holder, and a second rib that is spaced apart from the first rib by a preset gap in the height direction, and the second rib may be arranged relatively adjacent to one surface defining a bottom of the cell holder, compared to the first rib.

In some embodiments, the cell holder may include at least one corner and the second rib may be arranged on the at least one corner of the cell holder.

In some embodiments, the second rib may be symmetrical with respect to a line forming the at least one corner of the cell holder.

In some embodiments, the first rib may be spaced apart from a line forming the at least one corner of the cell holder.

In some embodiments, the rib portion may further include a connection rib that has two end portions connected to an end portion of the first rib and an end portion of the second rib, respectively, and extends at a preset angle with respect to the first rib.

In some embodiments, the connection rib may be provided as a plurality of connection ribs, and the plurality of connection ribs may be arranged symmetrically with respect to a line forming a corner of the cell holder.

In some embodiments, the preset angle may be equal to or greater than 90 degrees.

In some embodiments, a distance from another surface of the cell holder opposite to the one surface to the first rib in the height direction may be greater than or equal to a distance from the one surface of the cell holder to the second rib in the height direction.

In the present embodiments, the preset gap may be equal to or greater than a distance from the one surface of the cell holder to the second rib in the height direction.

In the present embodiments, the adhesive part may be in contact with the rib portion and may be spaced apart from one surface defining a bottom of the cell holder.

In some embodiments, the first region may be spaced apart from the one surface defining the bottom of the cell holder, the second region may be located between the first region and the one surface of the cell holder, and the adhesive part may be located on the first region.

According to embodiments of the present disclosure for solving the above technical problem, a battery pack includes a battery cell that has two end portions along a height direction, a cell holder that accommodates the battery cell therein and has at least one corner, a frame part that covers a side surface portion of the cell holder and has a curved portion formed in a region corresponding to the at least one corner, and a rib portion that extends along a preset path on the side surface portion of the cell holder and divides the side surface portion of the cell holder into a first region and a second region spaced apart from each other along the height direction.

In some embodiments of the present disclosure, the rib portion may include a first rib that extends along a peripheral direction of the cell holder, and a second rib that is spaced apart from the first rib by a preset gap in the height direction, and the second rib may be arranged adjacent to one surface defining a bottom of the cell holder.

In some embodiments, the second rib may be arranged on the at least one corner of the cell holder.

In some embodiments, the rib portion may further include a connection rib that has both end portions connected to an end portion of the first rib and an end portion of the second rib, respectively, and extends at a preset angle with the first rib.

In some embodiments, the connection rib may be provided in a plurality, and the plurality of connection ribs may be arranged symmetrically with respect to a line forming the at least one corner of the cell holder.

In some embodiments, a notch portion may be formed at one side of the frame part adjacent to the curved portion, such that a space inside and a space outside of the frame part communicate with each other, and the connection rib may be located in a region corresponding to the notch portion.

In some embodiments, the notch portion may be arranged adjacent to the one surface defining the bottom of the cell holder, and a distance from the notch portion to the first rib in the height direction may be at least three times a distance from the notch portion to the second rib in the height direction.

In some embodiments, the rib portion may further include a reinforcing rib that is arranged between the one surface defining the bottom of the cell holder and the second rib and is connected to an outer peripheral surface of the cell holder and one side of the second rib.

At least some of the above and other features of the invention are set out in the claims.

### BRIEF DESCRIPTION OF THE DRAWINGS

The above and other aspects, features, and advantages of certain embodiments of the disclosure will be more apparent from the following description taken in conjunction with the accompanying drawings.

The following drawings accompanying this specification illustrate embodiments of the present disclosure and, together with the detailed description of the present disclosure described below, serve to further understand the technical idea of the present disclosure; therefore, the present disclosure should not be interpreted as being limited to matters described in such drawings:
FIG. 1 is a perspective view illustrating a battery pack according to some embodiments of the present disclosure;
FIG. 2 is an exploded perspective view illustrating the battery pack of FIG. 1;
FIG. 3 is an enlarged diagram of a part A in FIG. 1;
FIG. 4 is a perspective view illustrating a cell holder according to some embodiments of the present disclosure;
FIG. 5 is a front view of the cell holder illustrated in FIG. 4;
FIG. 6 is a side view of the cell holder illustrated in FIG. 4; and
FIG. 7 is an enlarged diagram illustrating a part B of FIG. 4.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, some embodiments are merely described below, by referring to the figures, to explain aspects. As used herein, the term "and/or" includes any and all combinations of one or more of the associated listed items. Expressions such as "at least one of," when preceding a list of elements, modify the entire list of elements and do not modify the individual elements of the list.

Hereinafter, some embodiments of the present disclosure will be described in detail with reference to the attached drawings. Prior to this, terms or words used in this specification and claims should not be interpreted as limited to their usual or dictionary meanings, and should be interpreted as meanings and concepts that conform to the technical idea of the present disclosure based on the principle that the inventor can appropriately define the concept of the term in order to explain his or her own technology in the best way. Therefore, the embodiments described in this specification and the configurations illustrated in the drawings are only some embodiments of the present disclosure and do not represent all of the technical ideas of the present disclosure, and it should be understood that there may be various equivalents and modified examples that can replace them at the time of filing this application.

Additionally, when used herein, the words "comprise" or "include" and/or "comprising" or "including" specify the presence of stated features, numbers, steps, operations, members, elements and/or groups thereof, but do not preclude the presence or addition of one or more other features, numbers, operations, members, elements and/or groups thereof.

To help understand the present disclosure, the accompanying drawings are not illustrated based on actual scales, but some constituent elements may be exaggerated in dimension. In addition, the constituent elements in different embodiments may be assigned with the same reference numerals.

The expression indicating that two comparison targets are 'equal' to each other means that the two comparison targets are 'substantially equal' to each other. Therefore, the substantial equality may include a case in which a deviation considered as being at a low level in the art is present, for example, a deviation within 5% is present. In addition, a configuration in which a particular parameter is constant in a certain region may mean that the parameter is constant from an average point of view.

Although the terms first, second, etc. are used to describe various components, these components are not limited by these terms. These terms are used only to distinguish one component from another, and unless otherwise specifically stated, it is to be understood that a first component may also be a second component.

Throughout the specification, unless otherwise specifically stated, each element may be singular or plural.

It will be understood that when a component is referred to being "on (or below)" or "above (or under)" another component, it can be positioned in contact with an upper surface (or a lower surface) of the other component, but another component may be positioned between the component and the other component on (or below) the component.

It will be further understood that when a component is referred to as being "connected", "coupled" or "joined" to another component, the components can be directly connected or joined to each other, but intervening elements may be present between them or each component may be "connected", "coupled" or "joined" to each other through another component. Throughout this disclosure, when a part is said to be "electrically connected" to another part, it may include not only a case where they are "directly connected," but also a case where they are "connected" with another element interposed therebetween.

In the present disclosure, unless otherwise stated, "A and/or B" means A, B, or A and B. That is, "and/or" includes all or any combination of a plurality of listed items. "C to D" refers to C or more and D or less, unless otherwise specified.

The terminology used herein is for the purpose of describing some embodiments of the present disclosure and is not intended to be limiting of the present disclosure.

As described herein, for a secondary battery, lithium may be used as a cathode, though the battery is not limited thereto.

In a battery pack that accommodates such a secondary battery, when an adhesive portion for connecting an internal component of the battery pack and a frame leaks outward, the performance or structural stability of the secondary battery may be reduced.

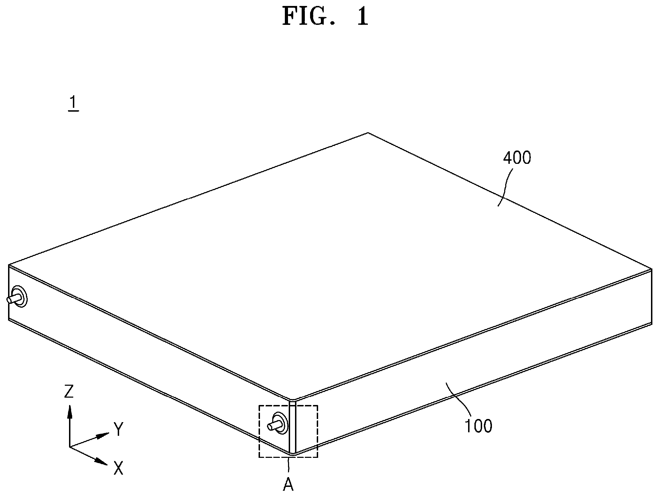

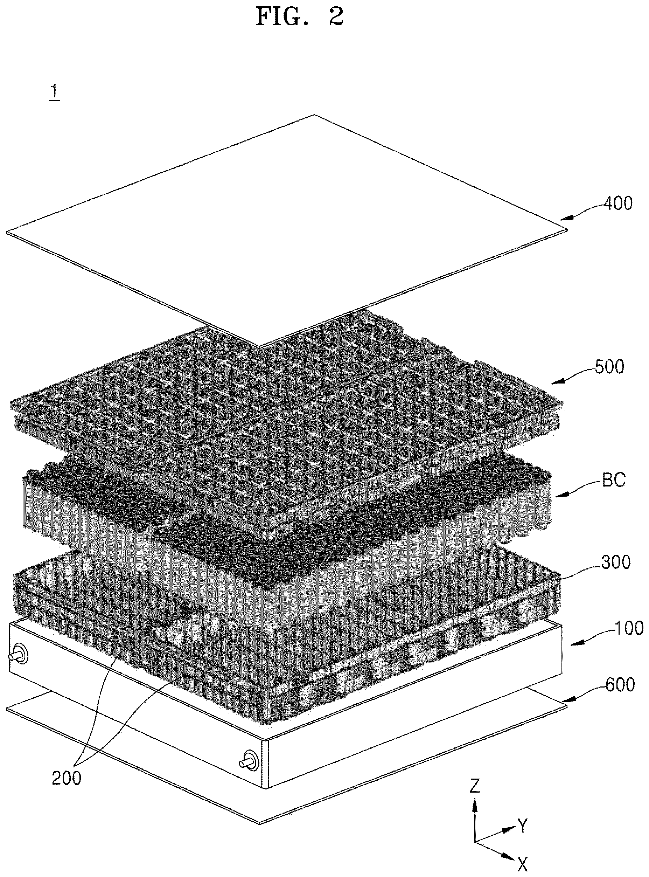

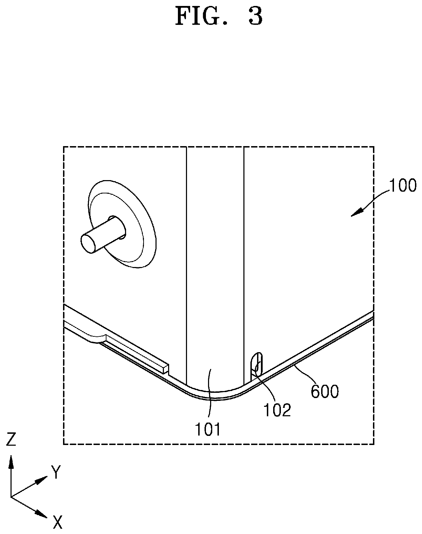

FIG. 1 is a perspective view illustrating a battery pack according to embodiments of the present disclosure. FIG. 2 is an exploded perspective view illustrating the battery pack of FIG. 1. FIG. 3 is an enlarged diagram of a part A in FIG. 1.

Referring to FIGS. 1 and 2, a battery pack 1 according to embodiments of the present disclosure may accommodate a plurality of battery cells BC and may include a frame part 100, a cell holder 200, an adhesive part 300, a cover part 400, a fixing part 500, and a cooling part 600.

The battery pack 1 may provide a space in which the plurality of battery cells BC are mounted, and may electrically connect the plurality of battery cells BC, to be used entirely as a single large-capacity power supply source. The battery pack 1 may be a large-capacity battery mounted in an electric vehicle.

In this specification, the battery cell BC may be a rechargeable secondary battery that supplies power to an external electronic device. For example, the battery cell BC may be interpreted as a lithium polymer battery, a lithium polymer ion battery, a lithium ion battery, a zinc air battery, a lithium sulfur battery, a lithium air battery, a sodium ion battery, a magnesium battery, an all-solid-state battery, or the like.

Referring to FIG. 2, the plurality of battery cells BC are illustrated as cylindrical batteries, but are not limited thereto, and may be pouch batteries or square-shaped batteries.

The plurality of battery cells BC may be battery cells BC of the same shape, and for simplicity of explanation, the following description will be made of a case where the plurality of battery cells BC are cylindrical cells.

Referring to FIG. 2, the battery cell BC includes two end portions, for example, an upper end portion and a lower end portion, along its height direction (Z-axis direction based on FIG. 2), and may be provided as a circular battery cell BC including a cylindrical outer circumferential surface between the upper end portion and the lower end portion.

A first electrode and a second electrode with different polarities may be located on the upper end portion and the lower end portion of the battery cell BC, respectively. For example, the first electrode and the second electrode of the battery cell BC may have opposite polarities to each other.

In some embodiments, the first electrode may be entirely located on any one of the upper end portion and the lower end portion of the battery cell BC, for example, the lower end portion, and the second electrode may be located on a center of the upper end portion. Here, each corner region of the upper end portion may be formed as the first electrode.

For example, in the battery cell BC, the entire lower end portion and the corner regions of the upper end portion may be covered with an integrally extending can, so as to form the first electrode of the same polarity. The center region of the upper end portion corresponding to a cap assembly electrically insulated from the can forming the first electrode may form the second electrode having a different polarity from that of the first electrode.

Although not illustrated in the drawings, the upper end portions of the adjacent battery cells BC may be electrically connected by a busbar, and the lower end portions of the adjacent battery cells BC may also be electrically connected by a busbar.

Busbars may be used to connect center regions of the upper end portions of the adjacent battery cells BC and to connect the center regions of the lower end portions of the adjacent battery cells BC. The center region of the upper end portion of the battery cell BC may be formed as a cap assembly forming the second electrode, and the center region of the lower end portion may be formed as a can forming the first electrode. Depending on the vertical arrangement, the center region of the upper end portion of the battery cell BC or the center region of the lower end portion of the battery cell BC may form the first electrode or the second electrode.

In this specification, the fact that the upper and lower end portions of the battery cell BC form the first electrode and the second electrode or the second electrode and the first electrode, respectively, may be interpreted as that the center region of the upper end portion of the battery cell BC and the center region of the lower end portion of the battery cell BC form the first electrode and the second electrode or the second electrode and the first electrode, respectively.

Also, in this specification, the busbars connecting the upper end portions to each other and the lower end portions to each other with respect to the adjacent battery cells BC may be interpreted as connecting the center regions of the upper end portions to each other or the center regions of the lower end portions to each other with respect to the adjacent battery cells BC.

The upper and lower end portions of the battery cell BC may be distinguished based on positions as well as the first and second electrodes. For example, the upper and lower end portions of the battery cell BC may denote an end portion formed at an upper position and an end portion at a lower position along the height direction of the battery cell BC, respectively.

That is, depending on the arrangement of the battery cells BC, the upper end portions of the adjacent battery cells BC may equally form the first electrodes or the second electrodes, or may differently form the first and second electrodes.

The adjacent battery cells BC may be arranged in a pattern reversed along the height direction (Z-axis direction based on FIG. 2), and accordingly, the upper end portions of the adjacent battery cells BC may form the first and second electrodes different from each other, and the lower end portions of the adjacent battery cells BC may also form the first and second electrodes different from each other.

The battery cells BC may be electrically connected to other adjacent battery cells BC. The battery cells BC adjacent to each other along an electrical connection direction may be arranged in a pattern reversed in the height direction, such that the different first and second electrodes of the adjacent battery cells BC may be connected in series.

However, it is not limited to this configuration, and the adjacent battery cells BC may be arranged such that the same electrodes, namely, the first electrodes and the second electrodes, may be connected to each other in parallel.

A group of battery cells BC forming the battery pack 1 may each be connected to adjacent battery cells BC in series, and the battery pack 1 may not include a parallel connection between the adjacent battery cells BC.

However, this disclosure is not limited thereto, and the battery pack 1 may also include a series connection and/or a parallel connection between the adjacent battery cells BC.

The battery cells BC adjacent to each other along the electrical connection direction may be arranged in an upside-down reversed pattern, and the upper end portions of the adjacent battery cells BC or the lower end portions of the adjacent battery cells BC may be connected to each other, thereby forming a series connection between the different first and second electrodes.

However, this disclosure is not limited to this configuration, and a parallel connection may also be formed between the first electrodes of the same polarity and between the second electrodes of the same polarity.

In this specification, the electrical connection direction of the battery cells BC may be interpreted as a direction in which adjacent battery cells BC are electrically connected to each other, and may not denote a specific direction but may include various connected directions through the arrangement of a plurality of busbars.

In some embodiments, the electrical connection direction of the battery cells BC may be formed in a zigzag shape. The battery cells BC may be provided as cylindrical battery cells BC, and the respective battery cells BC may be arranged in alternating positions to be interposed between adjacent battery cells BC. Therefore, the plurality of battery cells BC may be densely arranged.

The plurality of battery cells BC arranged in the alternating positions may be electrically connected to one another by a plurality of busbars arranged in a zigzag shape, and the electrical connection direction in a zigzag shape may be defined along the direction in which the plurality of busbars are arranged.

Referring to FIGS. 1 to 3, a frame part 100 according to embodiments of the present disclosure covers a side surface portion of a cell holder 200 that fixedly supports the battery cell BC.

In this specification, the 'side surface portion of the cell holder 200' may be interpreted as an outer peripheral surface of the cell holder 200, and for example, may be understood as an outer peripheral surface of the cell holder 200 that faces an inner peripheral surface of the frame part 100.

Referring to FIG. 2, the frame part 100 may be formed in the shape of a square housing with one surface (e.g., upper surface based on FIG. 2) and another surface (e.g., lower surface based on FIG. 2) open. For example, the frame part 100 may be formed in the shape of a square pillar which has a length direction corresponding to the height direction (Z-axis direction based on FIG. 2) of the battery cell BC.

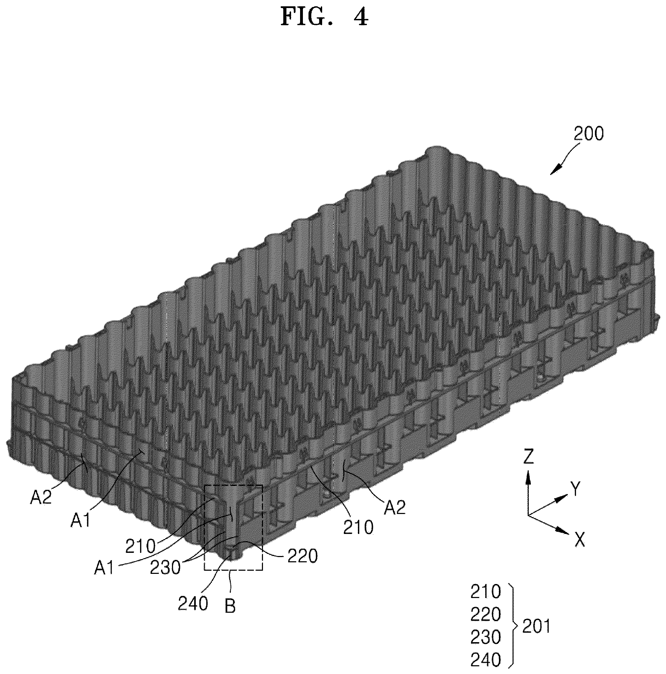

The inner peripheral surface of the frame part 100 may face the outer peripheral surface of the cell holder 200. For example, the inner peripheral surface of the frame part 100 may face a rib portion 201 formed on the outer peripheral surface of the cell holder 200 (as described later in relation to FIG. 4).

The cell holder 200 may be assembled inside the frame part 100, and an external terminal may be located on the frame part 100. The external terminal may be formed to be exposed to the outside of the frame part 100 and may be connected to an external device to form a path for charging and discharging current.

The external terminal may be electrically connected to the plurality of battery cells BC mounted in the cell holder 200. For example, a busbar may be connected to the external terminal, and the external terminal may be connected to the electrode of the battery cell BC through a busbar or lead tab.

Referring to FIG. 3, the frame part 100 may be formed in a shape in which a flat plate is curved (bent), and in this specification, one side of the frame part 100 that is curved to form a corner is referred to as a curved portion 101. The curved portion may be formed in a region corresponding to a corner of the cell holder.

The inner peripheral surface of the frame part 100 where the curved portion 101 is formed may face a corner of the cell holder 200. For example, a connection rib 230 (to be described later) may be located on the corner side of the cell holder 200, and an outer peripheral surface of the connection rib 230 may face the inner peripheral surface of the frame part 100 where the curved portion 101 is formed.

As described above, the frame part 100 may have a shape of a square pillar, and four curved portions 101 may be formed on the frame part 100. The four curved portions 101 may form corners of the square pillar, respectively.

A notch portion 102 formed in the shape of a notch or hole may be formed at one side of the frame part 100 adjacent to the curved portion 101. Accordingly, the notch portion 102 may be formed in a region where stress generated during the process of bending the frame part 100 to form the curved portion 101 is concentrated, thereby reducing an occurrence of a phenomenon that the frame part 100 is finely cracked or torn.

The notch portion 102 may be arranged adjacent to the curved portion 101, and for example, may be located on the outer peripheral surface of the frame part 100 adjacent to the cooling part 600.

The notch portion 102 may be arranged to face a second region A2, which will be described later, on the outer peripheral surface of the cell holder 200, and may be spaced apart from a first region A1 by a preset gap.

The notch portion 102 may allow inner and outer sides of the frame part 100 to communicate with each other, and for example, a space between the frame part 100 and the cell holder 200 and an outer space of the frame part 100 may communicate with each other through the notch portion 102.

An adhesive part 300 is located between the inner peripheral surface of the frame part 100 and the outer peripheral surface of the cell holder 200. In some embodiments, the adhesive part 300 may be located between the first region A1 of the outer peripheral surface of the cell holder 200 and the inner peripheral surface of the frame part 100 facing the first region A1. The adhesive part may include glue.

With the configuration as described herein, the adhesive part 300 may provide an effect of fixing the inner peripheral surface of the frame part 100 and the outer peripheral surface of the cell holder 200 to each other and/or reinforcing the structural stability of the frame part 100 and/or the cell holder 200.

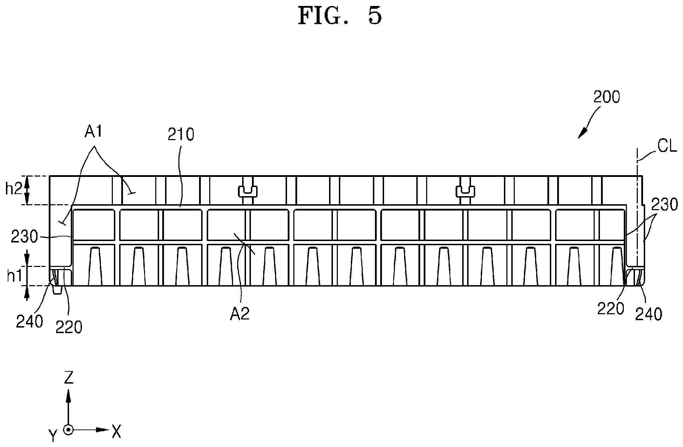

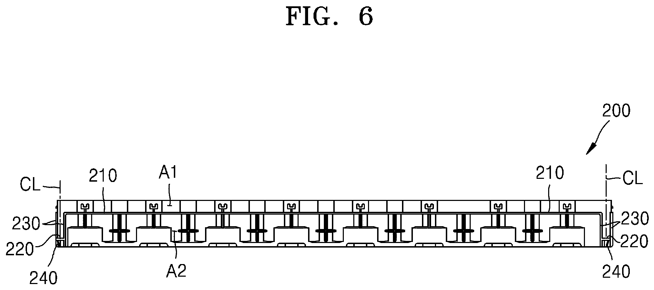

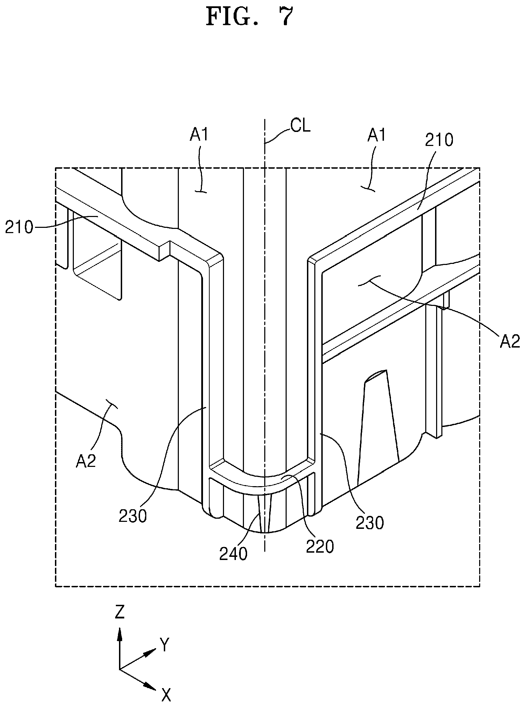

FIG. 4 is a perspective view illustrating a cell holder according to embodiments of the present disclosure. FIG. 5 is a front view of the cell holder illustrated in FIG. 4. FIG. 6 is a side view of the cell holder illustrated in FIG. 4. FIG. 7 is an enlarged diagram illustrating a part B of FIG. 4.

Referring to FIG. 4, the cell holder 200 according to embodiments of the present disclosure may be provided to accommodate the plurality of battery cells BC inside, and may include the rib portions 201 on the outer peripheral surface.

The cell holder 200 may form a plurality of cell spaces for accommodating the corresponding battery cells BC, and for example, may form cell spaces in a cylindrical shape for accommodating the battery cells BC in a cylindrical shape.

Referring to FIG. 2, the cell holder 200 may form the plurality of cell spaces corresponding to the battery cells BC, respectively. The cell holder 200 may be assembled in a direction facing the fixing part 500 (to be described later) with the plurality of battery cells BC interposed therebetween.

Referring to FIGS. 2 and 4, the cell holder 200 may include four side surface portions to accommodate a matrix arrangement of the battery cells BC that are arranged in one direction (X-axis direction based on FIG. 2) and another direction (Y-axis direction based on FIG. 2), and correspondingly, the frame part 100 may be formed in a square shape to accommodate or face the four side surface portions of the cell holder 200.

However, the technology is not limited thereto, and the shape of the cell holder 200 or the arrangement of the battery cells BC may be variously modified depending on a specific design.

Referring to FIGS. 4 to 7, the rib portion 201 is located on the side surface portion of the cell holder 200, and extends along a periphery of the side surface portion of the cell holder 200.

The rib portion 201 may be formed in the shape of a rib or flange that protrudes laterally from the side surface portion of the cell holder 200 toward the inner peripheral surface of the frame part 100. The rib portion 201 may be integrally formed with the cell holder 200.

The rib portion 201 may divide the side surface portion of the cell holder 200 into a first region A1 and a second region A2 that are spaced apart from each other in the height direction (Z-axis direction based on FIG. 2).

In some embodiments, the rib portion 201 may extend along a peripheral direction of the cell holder 200 on the side surface portion of the cell holder 200, and the side surface portion of the cell holder 200 may be divided into the first region A1 and the second region A2 based on the rib portion 201.

In this specification, the 'first region A1' may be interpreted as a region of one side (e.g., upper side based on FIG. 5) of the side surface portion of the cell holder 200 based on the rib portion 201. The first region A1 may be connected to the fixing part 500 and may be spaced apart from the cooling part 600 by a preset gap.

In some embodiments, the 'second region A2' may be interpreted as a region of another side (e.g., lower side based on FIG. 5) of the side surface portion of the cell holder 200 based on the rib portion 201. The second region A2 may be arranged adjacent to the cooling part 600 and may be spaced apart from the fixing part 500 by a preset gap.

The adhesive part 300 may be located/applied on the first region A1 of the side surface portion, and the first region A1 and the second region A2 may be divided by the rib portion 201. Accordingly, the phenomenon that the adhesive part 300 leaks or flows down to the second region A2 may be alleviated/suppressed.

This may provide an effect of alleviating/suppressing a phenomenon that the adhesive part 300 leaks to the outside of the battery pack 1 through the notch portion 102 of the frame part 100 facing the second region A2.

Hereinafter, a detailed description will be given of a specific, shape of the rib portion 201 that allows the adhesive part 300 to firmly connect the frame part 100 and the corners of the cell holder 200 while reducing an amount of the adhesive part 300 leaked to the outside of the frame part 100.

Referring to FIGS. 4 to 7, the rib portion 201 may include a first rib 210 extending along the peripheral direction of the cell holder 200, a second rib 220 spaced apart from the first rib 210 in the height direction (Z-axis direction based on FIG. 4), a connection rib 230 connecting the first rib 210 and the second rib 220, and a reinforcing rib 240 reinforcing the rigidity of the second rib 220.

The second rib 220 may be located adjacent to and/or relatively closer to one surface defining the bottom of the cell holder 200 than the first rib 210.

In this specification, the 'one surface defining the bottom of the cell holder 200' may be interpreted as one surface on one side (e.g., lower side based on FIG. 4) of the cell holder 200 or one surface of the cell holder 200 facing the cooling part 600. In some embodiments, the 'one surface defining the bottom of the cell holder 200' may also be interpreted as one surface adjacent to the lower end portion of the battery cell BC.

Referring to FIGS. 5 to 7, the first rib 210 and the second rib 220 may be parallel to each other. For example, the first rib 210 and the second rib 220 may be arranged on the side surface portion of the cell holder 200 to be parallel to each other while being spaced apart from each other by a preset gap, and a direction in which the first rib 210 and the second rib 220 extend may be parallel to the one surface defining the bottom of the cell holder 200.

In embodiments, the first rib 210 and the second rib 220 may be arranged on the side surface portion of the cell holder 200 to be parallel to each other while being spaced apart from each other by a preset gap, and a direction in which the first rib 210 and the second rib 220 extend may be perpendicular to a direction in which the connection rib 230 (to be explained later) extends.

Among side regions of the cell holder 200, a region corresponding to one side (e.g., upper side as illustrated in FIG. 4) of the first rib 210 and the second rib 220 may be a first region A1, and a region corresponding to another side (e.g., lower side as illustrated in FIG. 4) of the first rib 210 and the second rib 220 may be a second region A2.

For example, the first region A1 may be spaced apart from the one surface defining the bottom of the cell holder 200, the second region A2 may be arranged between the first region A1 and the one surface defining the bottom of the cell holder 200, and the rib portion 201 may be arranged on a boundary between the first region A1 and the second region A2.

The cell holder 200 may include at least one corner, and the second rib 220 may be arranged on the corner of the cell holder 200. The second rib 220 may also be arranged to face the curved portion 101 of the frame part 100.

Referring to FIGS. 4 and 7, the second rib 220 may be symmetrically formed with respect to a line CL forming the corner of the cell holder 200 (hereinafter, referred to as a 'corner line'). For example, the direction in which the second rib 220 extends may be perpendicular to the corner line CL of the cell holder 200, and the second rib 220 may be formed symmetrically in a left-right direction with respect to the corner line CL of the cell holder 200 while intersecting the corner line CL of the cell holder 200.

The first rib 210 may be arranged to be spaced apart from the corner line CL of the cell holder 200. In some embodiments, the first rib 210 may be arranged on the side surface portion of the cell holder 200 that is spaced apart from the corner region of the cell holder 200. The first rib 210 located on one side surface portion of the cell holder 200 and the first rib 210 located on another side surface portion of the cell holder 200 may be connected to each other through the second rib 220 and the connection rib 230.

Referring to FIG. 7, a distance between one end portion of the first rib 210, for example, an end portion of the first rib 210 connected to the connection rib 230 and the corner line CL of the cell holder 200 may be in the range of 4 mm to 12 mm. For example, the distance between the end portion of the first rib 210 connected to the connection rib 230 and the corner line CL of the cell holder 200 may be in the range of 6 mm to 10 mm.

In this specification, a 'first height h1' may be interpreted as a distance from the one surface defining the bottom of the cell holder 200 to the second rib 220 in the height direction (Z-axis direction based on FIG. 4).

In some embodiments, a 'second height h2' may be interpreted as a distance from another surface of the cell holder 200, which is opposite the one surface defining the bottom of the cell holder 200, to the first rib 210 in the height direction (Z-axis direction based on FIG. 4).

Additionally, a 'thickness of the cell holder 200' may be interpreted as a length or thickness of the cell holder 200 in the height direction.

Referring to FIG. 5, the second height h2 may be equal to or relatively greater than the first height h1. For example, a ratio of the first height h1 to the thickness of the cell holder 200 may be in the range of 0.15 to 0.2, and for example, a ratio of the second height h2 to the thickness of the cell holder 200 may be in the range of 0.2 to 0.3.

A distance between the first rib 210 and the second rib 220 in the height direction (Z-axis direction based on FIG. 4) may be relatively greater than the first height h1 and the second height h2. For example, the distance between the first rib 210 and the second rib 220 in the height direction may be greater than the sum of the first height h1 and the second height h2.

For example, the distance between the first rib 210 and the second rib 220 in the height direction (Z-axis direction based on FIG. 4) may be 0.5 to 0.6 times the thickness of the cell holder 200.

For example, the distance between the first rib 210 and the second rib 220 in the height direction (Z-axis direction based on FIG. 4) may be 2.5 to 4 times the first height h1.

For example, the distance between the first rib 210 and the second rib 220 in the height direction (Z-axis direction based on FIG. 4) may be 1.5 to 3 times the second height h2.

The notch portion 102 may be arranged adjacent to the one surface defining the bottom of the cell holder 200. A distance from the notch portion 102 to the first rib 210 in the height direction (Z-axis direction based on FIG. 4) may be at least three times a distance from the notch portion 102 to the second rib 220 in the height direction.

Referring to FIGS. 4 to 7, the connection rib 230, according to embodiments of the present disclosure, may connect the first rib 210 and the second rib 220 and may be arranged on the corner side of the cell holder 200.

The connection rib 230 may be formed such that one end portion thereof is connected to an end portion of the first rib 210 and another end portion opposite to the one end portion is connected to an end portion of the second rib 220.

The connection rib 230 may extend at a preset angle with (respect to) the first rib 210, and for example, the preset angle may exceed 90 degrees or may be 90 degrees.

Referring to FIGS. 4 and 7, the connection rib 230 may be provided in plurality (e.g., as a plurality of connection ribs). The plurality of connection ribs 230 may be arranged symmetrically with respect to the corner line CL of the cell holder 200, and may be parallel to each other.

For example, two connection ribs 230 may be arranged on one corner of the cell holder 200. The two connection ribs 230 may each extend along an imaginary line parallel to the corner line CL of the cell holder 200, and distances between the connection ribs 230 and the corner line CL of the cell holder 200 may be the same.

The plurality of connection ribs 230 may be connected to each other by the second rib 220. In some embodiments, the second rib 220 arranged to intersect the corner line CL of the cell holder 200 may connect the connection rib 230 located on one side with respect to the corner line CL of the cell holder 200 and the connection rib 230 located on the opposite side to the one side based on the corner line CL of the cell holder 200.

The sum of the first height h1, the second height h2, and the length of the connection rib 230 may be equal to the thickness of the cell holder 200.

The first region A1 on the corner portion of the cell holder 200 may be defined as an area/region formed by the first rib 210, the connection rib 230, and the second rib 220.

Referring to FIGS. 5 to 7, near the corner of the cell holder 200, the first region A1 may extend from the first rib 210 to the region where the second rib 220 is located through the connection rib 230.

Although not illustrated in the drawings, the connection rib 230 may be located in a region corresponding to the notch portion 102 of the frame part 100. In some embodiments, the connection rib 230 may be located on one side of the side surface portion of the cell holder 200 that faces the notch portion 102 of the frame part 100.

Accordingly, as the area of the first region A1 is expanded in the vicinity of the corner of the cell holder 200 along one direction (Z-axis direction based on FIG. 4), an amount of the adhesive part 300 that is applied near the corner of the cell holder 200 may increase, so that the corner of the cell holder 200 and the frame part 100 may be firmly adhered to each other, or the rigidity of the corner of the cell holder 200 or the curved portion 101 of the frame part 100 may be further reinforced.

In some embodiments, even when the amount of the adhesive part 300 applied near the corner of the cell holder 200 increases, the connection rib 230 and the second rib 220 may suppress the adhesive part 300 from flowing in the one direction (e.g., toward the second region A2), thereby alleviating/suppressing leakage of the adhesive part 300 to the outside through the notch portion 102 of the frame part 100.

Referring to FIG. 7, the reinforcing rib 240 according to embodiments of the present disclosure is to reinforce the rigidity of the second rib 220, and may be arranged between the one surface defining the bottom of the cell holder 200 and the second rib 220.

The reinforcing rib 240 may be connected to the side surface portion of the cell holder 200 and one side of the second rib 220. For example, the reinforcing rib 240 may be connected to the side surface portion (e.g., outer peripheral surface) of the cell holder 200 corresponding to the second region A2 and one side (e.g., lower surface based on FIG. 7) of the second rib 220.

The reinforcing rib 240 may be arranged on the corner line CL of the cell holder 200. In some embodiments, the reinforcing rib 240 may be formed in a shape extending along the corner line CL of the cell holder 200 from one side (e.g., lower side based on FIG. 7) of the second rib 220.

The reinforcing rib 240 may be formed in a shape in which the thickness gradually increases from the one surface defining the bottom of the cell holder 200 toward the second rib 220. Here, in some embodiments, the thickness of the reinforcing rib 240 may be interpreted as a height protruding from the side surface portion of the cell holder 200.

Referring to FIG. 2, the adhesive part 300 according to some embodiments of the present disclosure may be arranged between the side surface portion of the cell holder 200 and the frame part 100, to connect the cell holder 200 and the frame part 100 or reinforce the rigidity of the cell holder 200 or the frame part 100.

The adhesive part 300 may be located/applied on a portion corresponding to the first region A1 of the side surface portion of the cell holder 200, and the adhesive part 300 may be arranged apart from the second region A2.

Referring to FIG. 2, the adhesive part 300 may be arranged on the side surface portion of the cell holder 200 at one side (e.g., upper side based on FIG. 2) based on the rib portion 201, and the thickness of the adhesive part 300 may be the same as a height by which the rib portion 201 protrudes from the side surface portion of the cell holder 200 or may be relatively thin.

Accordingly, the rib portion 201 may restrict the adhesive part 300 from moving toward the second region A2, thereby alleviating/suppressing the leakage of the adhesive part 300 into the notch portion 102 of the frame part 100 facing the second region A2.

The adhesive part 300 may be in contact with one side of the rib portion 201, and may be spaced apart from the one surface defining the bottom of the cell holder 200. In some embodiments, the adhesive part 300 may be arranged in the first region A1 while being in contact with one surface (e.g., upper surface based on FIG. 5) of the first rib 210, one surface (e.g., upper side based on FIG. 5) of the second rib 220, and one surface of the connection rib 230 facing the corner line CL of the cell holder 200.

Referring to FIGS. 1 and 2, the cover part 400 according to embodiments of the present disclosure may cover the cell holder 200 and the battery cells BC together with the frame part 100.

The battery cells BC mounted in the cell holder 200 may be located inside the cover part 400 and the frame part 100, and may be insulated or thermally insulated from an external environment.

Referring to FIG. 2, the fixing part 500 according to embodiments of the present disclosure may be assembled to the cell holder 200 in a vertical direction (based on FIG. 2) to fix the battery cells BC while protecting the battery cells BC from the outside.

The upper portion of the corresponding battery cell BC may be assembled to the fixing part 500, and the lower portion of the battery cell BC may be assembled to the cell holder 200. For example, the upper portion of the battery cell BC and the fixing part 500 may be fixed to each other in an adhering or shrink-fitting manner.

The fixing part 500 may include a busbar. For example, the fixing part 500 may be configured as a busbar, or a busbar may be arranged between the fixing part 500 and the cover part 400.

Referring to FIG. 2, the cooling part 600 according to embodiments of the present disclosure may be in surface-contact with the one surface defining the bottom of a cell holder 200 and may cool the cell holder 200 and the battery cells BC accommodated in the cell holder 200.

For example, the cooling part 600 may be formed in various shapes that are capable of cooling the battery pack 1, for example, in a shape having a cooling passage through which refrigerant, air, etc. may flow.

Hereinafter, some of the operating principles and effects of the battery pack 1 according to embodiments of the present disclosure will be described.

Referring to FIGS. 1 and 2, the plurality of battery cells BC may be mounted on the cell holder 200. The plurality of battery cells BC mounted in the cell holder 200 may be electrically connected to one another.

After the plurality of battery cells BC are mounted on the cell holder 200, the fixing part 500 may be assembled on the upper portion of the cell holder 200, thereby stably fixing the battery cells BC between the cell holder 200 and the fixing part 500.

The frame part 100 formed in the shape of the square frame may cover the side surface portions of the cell holder 200, the cover part 400 in the shape of the plate may cover the upper surface of the fixing part 500, and further, the cooling part 600 may cover the lower surface of the cell holder 200.

Through this, the outer peripheral surfaces of the cell holder 200 and the fixing part 500 that are assembled to each other to accommodate the plurality of battery cells BC may be surrounded by the cover part 400, the frame part 100, and the cooling part 600, thereby thermally insulating, insulating, or protecting the battery cells BC from the outside.

In the battery pack 1 according to embodiments of the present disclosure, the adhesive part 300 is arranged between the cell holder 200 and the frame part 100 to fix the cell holder 200 and the frame part 100 to each other and/or to reinforce the rigidity of the cell holder 200 or the frame part 100.

The adhesive part 300 may have fluidity, and thereby may flow toward the cooling part 600 due to a heat source transmitted from the outside, external impact, gravity, or other causes.

For example, the adhesive part 300 may flow on the side surface portion of the cell holder 200 for the aforementioned reason and may be discharged through the notch portion 102 formed in the frame part 100, which may deteriorate the structural stability of the battery pack 1 or have a negative effect on the peripheral components of the battery pack 1.

Referring to FIGS. 4 to 7, the cell holder 200 according to embodiments of the present disclosure include the rib portion 201 on its outer peripheral surface, thereby alleviating/suppressing the downward flow of the adhesive part 300.

In some embodiments, the rib portion 201 may divide the outer peripheral surface of the cell holder 200 into the second region A2 facing the notch portion 102 and the first region A1 spaced apart from the second region A2, and the adhesive part 300 may be located/applied only on the first region A1.

A height by which the rib portion 201 protrudes from the outer peripheral surface of the cell holder 200 may be relatively greater than the thickness of the adhesive part 300, and accordingly, the adhesive part 300 located/applied on the first region A1 may be restricted from moving toward the second region A2 by a jaw formed by the rib portion 201, thereby suppressing the adhesive part 300 from being discharged to the outside through the notch portion 102.

In some embodiments, the area of the first region A1 may be enlarged through the connection rib 230 and the second rib 220 at the corner portion where reinforcement of the cell holder 200 or the frame part 100 may be further required, thereby suppressing the adhesive part 300 from being discharged to the outside and simultaneously improving the reinforcement performance of the adhesive part 300 in the vicinity of the corner.

The battery pack 1 according to embodiments of the present disclosure can have an effect of alleviating the phenomenon that the adhesive part 300 located between the cell holder 200 and the frame part 100 leaks outward, by including the rib portion 201 that divides the outer peripheral surface of the cell holder 200 for accommodating the battery cells BC into the different regions.

Although the present disclosure has been described above by means of embodiments and drawings, the present disclosure is not limited thereto, and various modifications and variations are possible by those skilled in the art within the scope of the technical idea of the present disclosure and the scope of the patent claims to be described below.

The disclosure may be applied to various types of electric apparatuses using batteries.

An electric apparatus according to an embodiment may include an electric vehicle, a hybrid electric vehicle (HEV), a plug-in hybrid electric vehicle (PHEV), an electric bicycle, an E-scooter, an electric golf cart, and other vehicles utilizing battery packs as fuel sources.

An electric apparatus according to an embodiment may include a power device including an energy storage system using a battery, and equipment and facilities related to the energy storage system.

An electric apparatus according to an embodiment may include a power tool, and the power tool may include a metal cutting electric tool, a grinding electric tool, an assembly electric tool, and a railway power tool, and may include any tools that move by receiving power by a battery-based motor, such as an electric drill, an electric grinder, an electric wrench, an electric screwdriver, an electric hammer, an impact electric drill, a concrete vibrator, and an electric planer.

An electric apparatus according to an embodiment may include all application products that use batteries, such as mobile phones, tablet computers, laptop computers, wearable devices, electric toys, mobile electric toys, game consoles, ships, airplanes, spacecraft, drones, and robots.

According to embodiments, a battery pack can have an effect of alleviating a phenomenon that an adhesive part located between a cell holder and a frame part leaks outward, by including a rib portion that divides an outer peripheral surface of the cell holder for accommodating battery cells into different regions.

However, the effects obtainable through the present disclosure are not limited to the effects described above, and other technical effects not mentioned will be clearly understood by those skilled in the art from the description of the technology.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the figures, it will be understood by those of ordinary skill in the art that various changes in form and details may be made therein without departing from the scope as defined by the following claims.

Embodiments are set out in the following clauses:
Clause 1. A battery pack comprising:
   a battery cell that has two end portions along a height direction;
   a cell holder that accommodates the battery cell therein;
   a frame part that covers a side surface portion of the cell holder;
   an adhesive part that is arranged between the cell holder and the frame part; and
   a rib portion that extends along a periphery of the side surface portion of the cell holder and divides the side surface portion of the cell holder into a first region and a second region which are spaced apart from each other along the height direction.
Clause 2. The battery pack of clause 1, wherein the rib portion comprises, a first rib that extends along a peripheral direction of the cell holder; and a second rib that is spaced apart from the first rib by a preset gap in the height direction, optionally wherein the second rib is arranged adjacent to one surface defining a bottom of the cell holder.
Clause 3. The battery pack of clause 2, wherein the cell holder comprises at least one corner, and the second rib is arranged on the at least one corner of the cell holder.
Clause 4. The battery pack of clause 3, wherein the second rib is symmetrical with respect to a line forming the at least one corner of the cell holder.
Clause 5. The battery pack of clause 3 or 4, wherein the first rib is spaced apart from a line forming the at least one corner of the cell holder.
Clause 6. The battery pack of any one of clauses 2 to 5, wherein the rib portion further comprises: a connection rib that has two end portions connected to an end portion of the first rib and an end portion of the second rib, respectively, and extends at a preset angle with respect to the first rib.
Clause 7. The battery pack of clause 6, wherein the connection rib is provided as a plurality of connection ribs, the plurality of connection ribs being arranged symmetrically with respect to a line forming a corner of the cell holder.
Clause 8. The battery pack of clause 6 or 7, wherein the preset angle is equal to or greater than 90 degrees.
Clause 9. The battery pack of any one of clauses 2 to 8, wherein a distance from another surface of the cell holder opposite to the one surface to the first rib in the height direction is greater than or equal to a distance from the one surface of the cell holder to the second rib in the height direction.
Clause 10. A battery pack comprising:
   a battery cell that has two end portions along a height direction;
   a cell holder that accommodates the battery cell therein and comprises at least one corner;
   a frame part that covers a side surface portion of the cell holder and has a curved portion formed in a region corresponding to the at least one corner; and
   a rib portion that extends along a periphery of the side surface portion of the cell holder and divides the side surface portion of the cell holder into a first region and a second region which are spaced apart from each other along the height direction.
Clause 11. The battery pack of clause 10, wherein the rib portion further comprises, a first rib that extends along a peripheral direction of the cell holder; and a second rib that is spaced apart from the first rib by a preset gap in the height direction, wherein the second rib is arranged adjacent to one surface defining a bottom of the cell holder.
Clause 12. The battery pack of clause 11, wherein the second rib is arranged on the at least one corner of the cell holder.
Clause 13. The battery pack of clause 11 or 12, wherein the rib portion further comprises, a connection rib that has two end portions connected to an end portion of the first rib and an end portion of the second rib, respectively, and extends at a preset angle with the first rib.
Clause 14. The battery pack of clause 13, wherein the connection rib is provided in a plurality, the plurality of connection ribs being arranged symmetrically with respect to a line forming the at least one corner of the cell holder.
Clause 15. An electric apparatus comprising the battery pack according to any one of clauses 1 to 14.

## Claims

1. A battery pack comprising:
a battery cell that has two end portions along a height direction;
a cell holder that accommodates the battery cell therein;
a frame part that covers a side surface portion of the cell holder; and
a rib portion that extends along a periphery of the side surface portion of the cell holder and divides the side surface portion of the cell holder into a first region and a second region which are spaced apart from each other along the height direction.

2. The battery pack of claim 1 comprising an adhesive part that is arranged between the cell holder and the frame part, optionally the adhesive part may be in contact with the rib portion and may be spaced apart from one surface defining a bottom of the cell holder.

3. The battery pack of claim 2, wherein the first region may be spaced apart from the one surface defining the bottom of the cell holder, the second region may be located between the first region and one surface of the cell holder defining a bottom of the cell holder, and the adhesive part may be located on the first region.

4. The battery pack of claim 1, 2 or 3, wherein the rib portion comprises:
a first rib that extends along a peripheral direction of the cell holder; and
a second rib that is spaced apart from the first rib by a preset gap in the height direction,
optionally, wherein the second rib is arranged adjacent to one surface defining a bottom of the cell holder.

5. The battery pack of claim 4, wherein the cell holder comprises at least one corner, and the second rib is arranged on the at least one corner of the cell holder.

6. The battery pack of claim 5, wherein the frame part has a curved portion formed in a region corresponding to the at least one corner.

7. The battery pack of claim 5 or 6, wherein the second rib is symmetrical with respect to a line forming the at least one corner of the cell holder.

8. The battery pack of claim 5, 6 or 7, wherein the first rib is spaced apart from a line forming the at least one corner of the cell holder.

9. The battery pack of any one of claims 4 to 8, wherein the rib portion further comprises:
a connection rib that has two end portions connected to an end portion of the first rib and an end portion of the second rib, respectively, and extends at a preset angle with respect to the first rib.

10. The battery pack of claim 9, wherein the connection rib is provided as a plurality of connection ribs, the plurality of connection ribs being arranged symmetrically with respect to a line forming a corner of the cell holder.

11. The battery pack of claim 9 or 10, wherein the preset angle is equal to or greater than 90 degrees.

12. The battery pack of claim 9, 10, or 11, wherein a notch portion is formed at one side of the frame part adjacent to the curved portion, such that a space inside and a space outside of the frame part communicate with each other, and wherein the connection rib is located in a region corresponding to the notch portion.

13. The battery pack of claim 12, wherein the notch portion is arranged adjacent to the one surface defining the bottom of the cell holder, and a distance from the notch portion to the first rib in the height direction may be at least three times a distance from the notch portion to the second rib in the height direction.

14. The battery pack of any one of claims 4 to 13, wherein a distance from another surface of the cell holder opposite to the one surface to the first rib in the height direction is greater than or equal to a distance from the one surface of the cell holder to the second rib in the height direction.

15. An electric apparatus comprising the battery pack according to any one of claims 1 to 14.
